# EUROPEAN PATENT SPECIFICATION

(11) **EP 4 322 320 B1**
(45) Date of publication and mention of the grant of the patent: **13.05.2026**
(21) Application number: 21936085.6
(22) Date of filing: 28.09.2021
(51) Int. Cl.: H01M 50/569, H01G 11/12, H01M 50/209, H01M 50/249, H01M 50/505, H01G 11/76, H01G 11/82, H01M 50/50, H01M 50/503, H01M 50/507, H01M 50/516, H01M 50/55, H01M 50/553

(54) **BATTERY PACK**
BATTERIEPACK
BLOC-BATTERIE

(30) Priority: 07.04.2021 JP 2021065486
(43) Date of publication of application: 14.02.2024
(73) Proprietor: Vehicle Energy Japan Inc., Hitachinaka-shi, Ibaraki 312-8505 (JP)
(72) Inventor: UNNO, Akira, Hitachinaka-shi, Ibaraki 312-8505 (JP); SUGAWARA, Tatsuo, Hitachinaka-shi, Ibaraki 312-8505 (JP); HOSHI, Hiroshi, Hitachinaka-shi, Ibaraki 312-8505 (JP)
(74) Representative: Strehl & Partner mbB
(86) International application number: PCT/JP2021/035570
(87) International publication number: WO 2022/215286

(56) References cited:
- JP-A- 2000 333 343
- JP-A- 2007 323 952
- JP-A- 2017 098 043
- JP-A- 2020 087 650
- US-A1- 2014 370 366
- US-A1- 2017 133 656

## Description

### Technical Field

The present invention relates to a battery pack.

### Background Art

Conventionally, there is a secondary battery module including a voltage detection terminal in which a crank shape is formed between a "temporarily fixing portion" laser-welded to a bus bar and an "electrical connection portion" connected to an electric wire (see, for example,

### Patent Literature 1).

### Citation List

### Patent Literature

Patent Literature 1: Japanese Patent No. 6335864

An electro-chemical cell contacting system having the features in the pre-characterizing portion of Claim 1 is disclosed in JP 2020 087650 A. A further battery back related to the one of the present invention is disclosed in US 2017/133656 A1.

### Summary of Invention

### Technical Problem

However, in the above-described conventional technology, when the voltage detection terminal and the bus bar are ultrasonically bonded, disconnection of the electric wire occurs at the connection portion between the voltage detection terminal and the electric wire. That is, in the case of the shape of the voltage detection terminal as in the above-described conventional technology, there is a problem that the vibration load of ultrasonic welding directly propagates to the connection portion, and the disconnection of the electric wire occurs due to the vibration load.

Here, although the vibration load transmitted to the connection portion can be suppressed by pressing the connection portion, the structure of the secondary battery module merely presses the connection portion from a direction perpendicular to a vibration direction of the ultrasonic welding, so that an effect of suppressing the vibration load is small.

The present invention has been made in view of the above, and an object thereof is to prevent disconnection and damage of an electric wire connected to a voltage detection terminal when the voltage detection terminal is ultrasonically welded.

### Solution to Problem

In order to solve the above-described problems of the conventional technology, the present invention provides the battery pack defined in Claim 1. Further advantageous features are set out in the dependent claims.

### Advantageous Effects of Invention

According to the present invention, when a voltage detection terminal is ultrasonically welded, disconnection and damage of an electric wire connected to the voltage detection terminal can be prevented.

### Brief Description of Drawings

Fig. 1 is an external perspective view of a secondary battery module.
Fig. 2 is an exploded perspective view of the secondary battery module.
Fig. 3 is a perspective view of a secondary battery.
Fig. 4 is an exploded perspective view of configurations of a harness case, a voltage detection line, and a bus bar as viewed from the Z-axis negative direction side.
Fig. 5 is a perspective view of a voltage detection terminal according to a first embodiment.
Fig. 6 is a schematic view illustrating bonding results by ultrasonic welding and laser welding.
Fig. 7 is a perspective view of a voltage detection terminal according to a second embodiment as an example useful for understanding the invention rather than an embodiment of the invention.
Fig. 8 is a perspective view of a voltage detection terminal according to a third embodiment.
Fig. 9 is a perspective view of a voltage detection terminal according to a fourth embodiment.
Fig. 10 is a perspective view of a voltage detection terminal according to a fifth embodiment.
Fig. 11 is a perspective view of a voltage detection terminal according to a sixth embodiment.
Fig. 12 is a perspective view of a voltage detection terminal according to a seventh embodiment as an example useful for understanding the invention rather than an embodiment of the invention.

### Description of Embodiments

Hereinafter, embodiments of the present invention and embodiments as examples useful for its understanding will be described in detail with reference to the drawings. The following embodiments can be applied to a battery system constituting a power supply of a hybrid vehicle, a plug-in hybrid vehicle, an electric vehicle, a hybrid truck, a railway vehicle, or the like. In addition, the following embodiments can be applied to a battery system including a chargeable and dischargeable secondary battery such as a lithium ion battery, a lead battery, a nickel hydrogen battery, a polyvalent cation battery, an electric double layer capacitor, or a hybrid capacitor.

In the following embodiments, a battery pack in which a plurality of secondary battery cells are connected in series is exemplified as an application target of the present invention. However, the present invention can also be applied to a battery pack in which a plurality of secondary battery cells connected in parallel are connected in series, or a battery pack in which a plurality of secondary battery cells connected in series are connected in parallel.

In the following description, the same reference numerals are given to the same configurations, and redundant description will be omitted. In the following description, an XYZ coordinate system having an X axis, a Y axis, and a Z axis as coordinate axes is used as illustrated in the drawings. Arrows on respective axes of the X axis, the Y axis, and the Z axis indicate positive directions of the coordinate axes. The X axis is a coordinate axis in a longitudinal direction of a secondary battery module 100. The Y axis is a coordinate axis in a lateral direction of the secondary battery module 100. The Z axis is a coordinate axis in a vertical direction of the secondary battery module 100. A plane including the X axis and the Y axis is referred to as an XY plane, a plane including the Y axis and the Z axis is referred to as a YZ plane, and a plane including the X axis and the Z axis is referred to as an XZ plane.

### <First Embodiment>

### (Configuration of Secondary Battery Module 100)

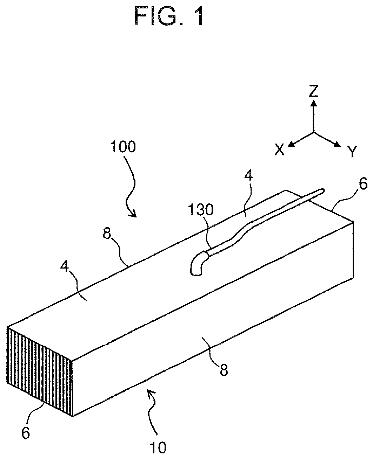

An example of a configuration of a secondary battery module 100 to which the present invention is applied will be described with reference to Figs. 1 to 4. The secondary battery module 100 is an example of a battery pack.

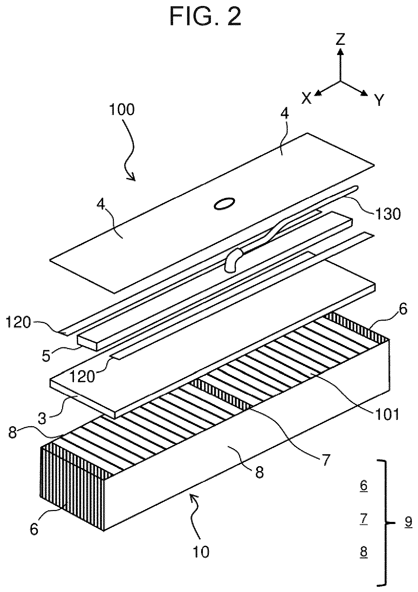

Fig. 1 is an external perspective view of the secondary battery module 100. Fig. 2 is an exploded perspective view of the secondary battery module 100. In the secondary battery module 100, a plurality of secondary battery cells 101 are electrically connected by a bus bar 120.

As illustrated in Figs. 1 and 2, the secondary battery module 100 includes a cell block 10, a plurality of voltage detection lines 130, a bus bar case 3, a bus bar cover 4, and a harness case 5.

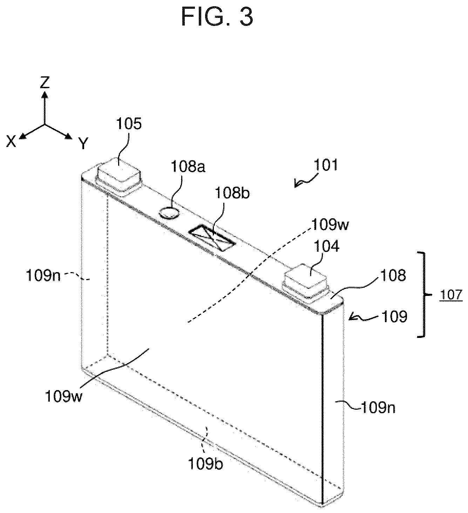

In the cell block 10, the plurality of secondary battery cells 101 are stacked and arranged in an X-axis direction via a cell holder, and are held by a cell holding mechanism 9. The secondary battery cell 101 has a flat rectangular parallelepiped shape (rectangular shape) and has a pair of wide side plates 109w (see Fig. 3).

Fig. 3 is a perspective view of the secondary battery cell 101. The secondary battery cell 101 constituting the cell block 10 will be described with reference to Fig. 3. All of the plurality of secondary battery cells 101 have the same structure.

As illustrated in Fig. 3, the secondary battery cell 101 has a rectangular battery container 107 including a battery lid 108 and a battery can 109. The battery lid 108 and the battery can 109 are formed of, for example, aluminum or an aluminum alloy.

The battery can 109 has a rectangular parallelepiped shape, and has an opening on one surface of a rectangular parallelepiped. The battery lid 108 is a rectangular flat plate, and is laser-welded to close the opening of the battery can 109 to seal the battery can 109.

The battery container 107 has a pair of wide side plates 109w, a pair of narrow side plates 109n, a battery lid 108, and a bottom plate 109b. The wide side plate 109w constitutes a largest surface (wide surface) among side surfaces constituting the battery container 107. The narrow side plate 109n constitutes a smallest surface among side surfaces constituting the battery container. In the battery container 107, the pair of wide side plates 109w faces each other, the pair of narrow side plates 109n faces each other, and the battery lid 108 and the bottom plate 109b face each other.

The battery lid 108 has a positive electrode terminal 104 and a negative electrode terminal 105 at both ends in a Y-axis direction. The positive electrode terminal 104 and the negative electrode terminal 105 have a rectangular parallelepiped shape, and a top surface on the Z-axis positive direction side in contact with the bus bar 120 is formed as a flat surface parallel to the battery lid 108.

A charge/discharge element (not illustrated) covered with an insulating case is disposed inside the battery container 107. In the charge/discharge element, a positive electrode is connected to the positive electrode terminal 104, and a negative electrode is connected to the negative electrode terminal 105. The charge/discharge element supplies power to the outside through the positive electrode terminal 104 and the negative electrode terminal 105 to perform discharge, and receives power supplied from the outside to perform charge.

The battery lid 108 has a liquid injection hole for injecting an electrolytic solution into the battery container 107. The liquid injection hole is sealed by a liquid injection plug 108a after the electrolytic solution is injected.

The battery lid 108 has a gas discharge valve 108b between the positive electrode terminal 104 and the negative electrode terminal 105. The gas discharge valve 108b is cleaved when the secondary battery cell 101 generates heat due to an abnormality such as overcharge to generate gas and a pressure in the battery container 107 increases to reach a predetermined pressure. The cleaved gas discharge valve 108b discharges the gas inside the battery container 107 to lower the pressure inside the battery container 107.

The description returns to the description Figs. 1 and 2. As illustrated in Figs. 1 and 2, the cell holding mechanism 9 has a pair of end plates 6, a center plate 7, and a pair of side frames 8. The pair of end plates 6 is disposed at both ends of the cell block 10 in the X-axis direction, and sandwiches the plurality of secondary battery cells 101 via the cell holder.

The center plate 7 is disposed at the center in the X-axis direction of a group of the secondary battery cells 101 arranged. The pair of side frames 8 is disposed at both ends of the cell block 10 in the Y-axis direction, and is fixed to the end plates 6 and the center plate 7 with screws or the like. The plurality of secondary battery cells 101 and the cell holder are fixed by fastening the pair of side frames 8 to the pair of end plates 6 and the center plate 7 in a state of being sandwiched between the pair of end plates 6.

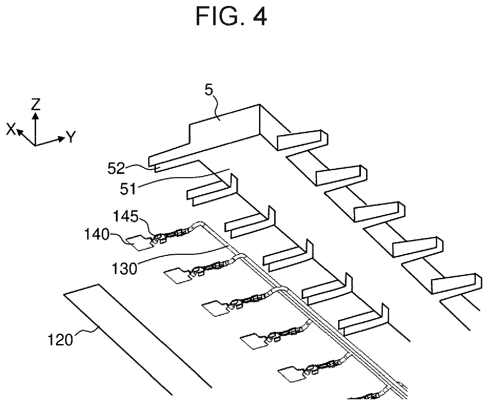

In the secondary battery module 100, the positive electrode terminal 104 of one secondary battery cell 101 and the negative electrode terminal 105 of the other secondary battery cell 101 adjacent in the X-axis direction are bonded to the bus bar 120 illustrated in Fig. 2 by laser welding. The adjacent secondary battery cells 101 are electrically connected in series by the bus bar 120. The bus bar 120 is connected to a control device (not illustrated) for monitoring the voltage of the secondary battery cell 101 via the voltage detection line 130. The voltage detection line 130 has a voltage detection terminal 140 (see Fig. 4). The voltage detection terminal 140 is bonded to the bus bar 120 by ultrasonic welding.

Fig. 4 is an exploded perspective view of configurations of the harness case 5, the voltage detection line 130, and the bus bar 120 as viewed from the Z-axis negative direction side (the side of the secondary battery cell 101). The harness case 5 is fixed in combination with the bus bar case 3 in a state where the voltage detection line 130 is wired to the harness case 5 and the voltage detection terminal 140 and the bus bar 120 are bonded.

The harness case 5 has a wiring storage portion 51 and a fitting portion 52. The voltage detection terminal 140 is fixed to the harness case 5 in a state where the voltage detection line 130 is wired in the wiring storage portion 51 and a fitting portion 145 is fitted into the fitting portion 52 of the harness case 5. The voltage detection terminal 140 is bonded to the bus bar 120 by ultrasonic welding in a state of being fixed to the harness case 5.

The harness case 5 and the bus bar case 3 are assembled in a state where positions of the plurality of voltage detection terminals 140 are fixed by bonding with the bus bar 120. Therefore, when the harness case 5 and the bus bar case 3 are assembled, it is possible to prevent the voltage detection terminals 140 from coming into contact with each other and short-circuiting.

In addition, the voltage detection terminal 140 is covered with the harness case 5 and the bus bar case 3, except for a portion bonded to the bus bar 120. Since the harness case 5 and the bus bar case 3 are formed of an insulating resin, the insulation between the voltage detection terminal 140 and other components can be enhanced.

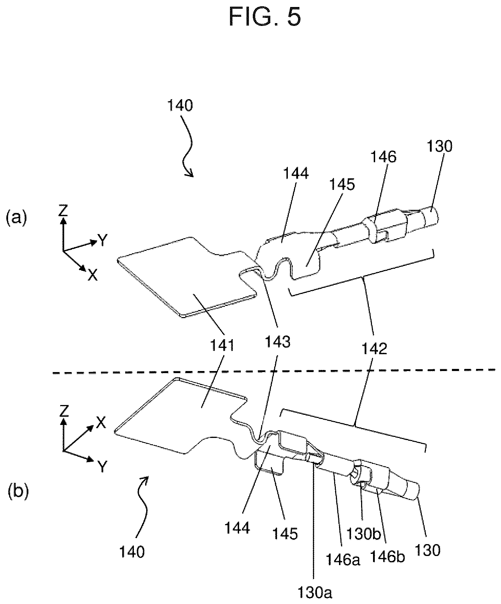

Fig. 5 is a perspective view of the voltage detection terminal 140 according to the first embodiment. Fig. 5(a) is a perspective view of the voltage detection terminal 140 as viewed from the Z-axis positive direction side (the side of the harness case 5), and Fig. 5(b) is a perspective view of the voltage detection terminal 140 as viewed from the Z-axis negative direction side (the side of the secondary battery cell 101).

The voltage detection terminal 140 is manufactured by, for example, pressing a copper plate. The voltage detection terminal 140 has a first base portion 141 and a second base portion 142. The first base portion 141 is bonded to the bus bar 120 by ultrasonic welding. The second base portion 142 is connected to the voltage detection line 130 by caulking.

The voltage detection terminal 140 has, between the first base portion 141 and the second base portion 142, a protrusion portion 143 having a curved shape (crank shape) formed so as to protrude in the Z-axis negative direction in cross-sectional view in a Z-axis direction (or in plan view of a YZ plane).

The second base portion 142 has a support portion 144, a fitting portion 145, and a connection portion 146. The support portion 144 and the fitting portion 145 are located on the side of the protrusion portion 143 in the second base portion 142. The fitting portion 145 intersects with the support portion 144 and protrudes in the Z-axis negative direction so as to be supported by the support portion 144. The fitting portion 145 is fitted into the fitting portion 52 of the harness case 5 from the side of the support portion 144 and is fitted into the fitting portion 52.

The connection portion 146 is located on the side opposite to the protrusion portion 143 in the second base portion 142, and is connected to the voltage detection line 130 by caulking. The connection portion 146 has a first connection portion 146a and a second connection portion 146b. The first connection portion 146a and the second connection portion 146b are caulking members, and legs of the caulking extend in the Z-axis negative direction similarly to the fitting portion 145.

The protrusion direction of the protrusion portion 143, the fitting portion 145, and the leg of the caulking of the connection portion 146 in the voltage detection terminal 140 is a direction facing the secondary battery cell 101.

The voltage detection line 130 is an electric wire covered with an insulator, and has an electric wire exposed portion 130a where the electric wire is exposed at a tip portion connected to the connection portion 146. The connection portion 146 caulks the electric wire exposed portion 130a by the first connection portion 146a to electrically connect the voltage detection line 130 to the voltage detection terminal 140. In addition, the connection portion 146 caulks an insulator covering portion 130b corresponding to the root of the electric wire exposed portion 130a of the voltage detection line 130 by the second connection portion 146b to physically fix the voltage detection line 130 to the voltage detection terminal 140. That is, the two legs of the caulking extending in the Z-axis negative direction with the voltage detection line 130 therebetween are pressurized from the X-axis direction and the Z-axis direction, and the two legs of the caulking are fixed to the second base portion 142 so as to hold the voltage detection line 130.

Since a vibration in the Y-axis direction, which is generated along with the ultrasonic welding and propagates from the first base portion 141 to the second base portion 142, deforms the second base portion 142 which is a tip side of the vibration, a portion of the electric wire exposed portion 130a of the voltage detection line 130 between the first connection portion 146a and the second connection portion 146b, which is not caulked by the first connection portion 146a, may be disconnected or damaged. On the other hand, since a vibration of a cantilever hardly deforms the second base portion 142 which is the tip side of the vibration, it is possible to prevent disconnection and damage which are likely to occur in the connection portion 146.

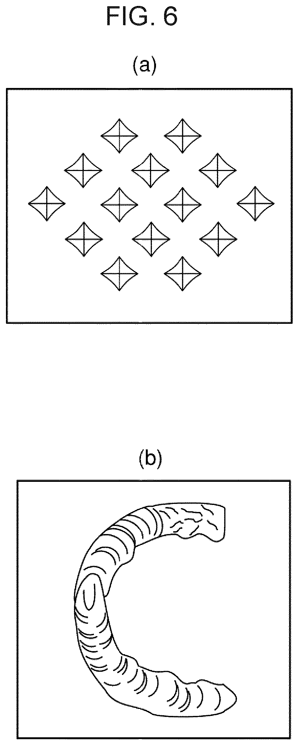

Note that a welding result by ultrasonic welding has a feature that can be visually identified as compared with other welding results of laser welding and the like. Fig. 6 is a schematic view illustrating bonding results by ultrasonic welding and laser welding. In the bonding result by the ultrasonic welding in Fig. 6(a), spikes of the same shape appear side by side in a lattice shape. This is a large difference from the bonding result by the laser welding illustrated in Fig. 6(b) or other welding results, and is a feature that it is possible to visually determine that bonding is performed by the ultrasonic welding.

In the first embodiment described above, an example in which the protrusion portion 143 having a curved shape is provided between the first base portion 141 and the second base portion 142 of the voltage detection terminal 140 has been described, but the present invention is not limited thereto. Hereinafter, voltage detection terminals of other embodiments will be described.

### <Second Embodiment>

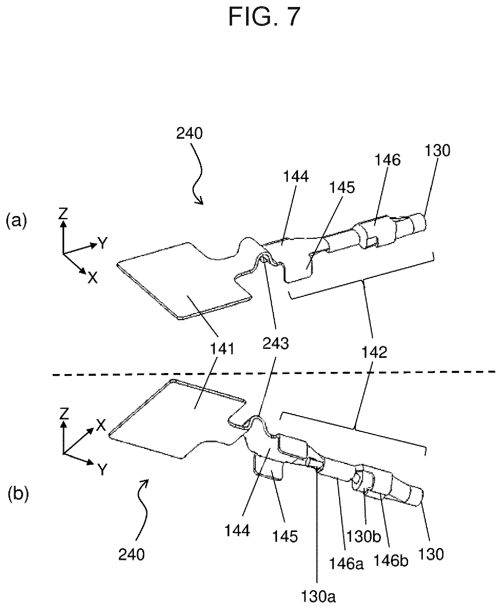

Fig. 7 is a perspective view of a voltage detection terminal 240 according to a second embodiment as an example useful for understanding the invention rather than an embodiment of the invention. Fig. 7(a) is a perspective view of the voltage detection terminal 240 as viewed from the Z-axis positive direction side (the side of a harness case 5), and Fig. 7(b) is a perspective view of the voltage detection terminal 240 as viewed from the Z-axis negative direction side (the side of a secondary battery cell 101). As compared with a voltage detection terminal 140 according has, between a first base portion 141 and a second base portion 142, instead of a protrusion portion 143, a protrusion portion 243 having a curved shape formed so as to protrude in a Z-axis positive direction in cross-sectional view in a Z-axis direction (or in plan view of a YZ plane). The other configurations are similar to those of the voltage detection terminal 140 of the first embodiment. Therefore, the second embodiment can also obtain effects similar to those of the first embodiment.

### <Third Embodiment>

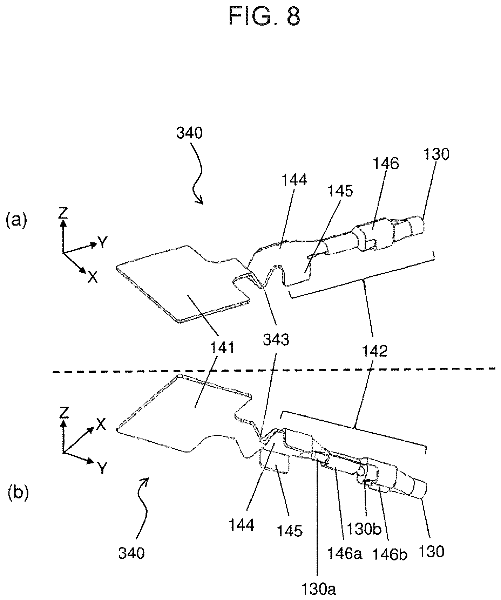

Fig. 8 is a perspective view of a voltage detection terminal 340 according to a third embodiment. Fig. 8(a) is a perspective view of the voltage detection terminal 340 as viewed from the Z-axis positive direction side (the side of a harness case 5), and Fig. 8(b) is a perspective view of the voltage detection terminal 340 as viewed from the Z-axis negative direction side (the side of a secondary battery cell 101). As compared with a voltage detection terminal 140 according to the first embodiment, the voltage detection terminal 340 according to the third embodiment has, between a first base portion 141 and a second base portion 142, instead of a protrusion portion 143, a protrusion portion 343 having a bent shape formed so as to protrude in a Z-axis negative direction in cross-sectional view in a Z-axis direction (or in plan view of a YZ plane). The other configurations are similar to those of the voltage detection terminal 140 of the first embodiment. Therefore, the third embodiment can also obtain effects similar to those of the first embodiment.

### <Fourth Embodiment>

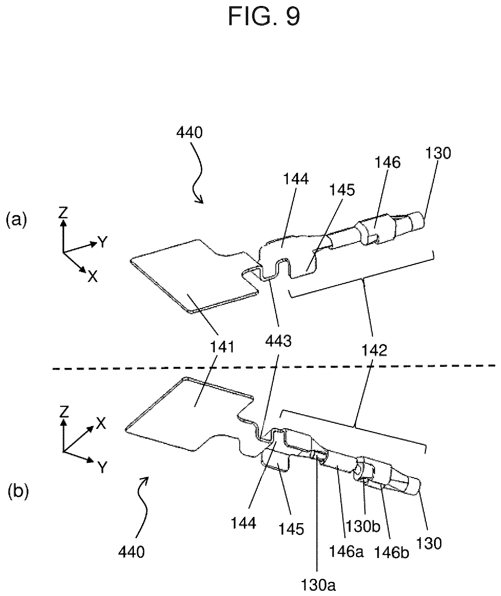

Fig. 9 is a perspective view of a voltage detection terminal 440 according to a fourth embodiment. Fig. 9(a) is a perspective view of the voltage detection terminal 440 as viewed from the Z-axis positive direction side (the side of a harness case 5), and Fig. 9(b) is a perspective view of the voltage detection terminal 440 as viewed from the Z-axis negative direction side (the side of a secondary battery cell 101). As compared with a voltage detection terminal 140 according to the first embodiment, the voltage detection terminal 440 according to the fourth embodiment has, between a first base portion 141 and a second base portion 142, instead of a protrusion portion 143, a protrusion portion 443 having a rectangular shape formed to protrude in a Z-axis negative direction in cross-sectional view in a Z-axis direction (or in plan view of a YZ plane). The other configurations are similar to those of the voltage detection terminal 140 of the first embodiment. Therefore, the fourth embodiment can also obtain effects similar to those of the first embodiment.

### <Fifth Embodiment>

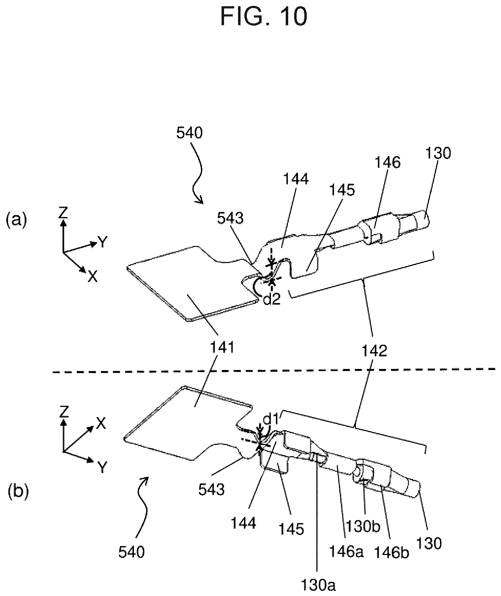

Fig. 10 is a perspective view of a voltage detection terminal 540 according to a fifth embodiment. Fig. 10(a) is a perspective view of the voltage detection terminal 540 as viewed from the Z-axis positive direction side (the side of a harness case 5), and Fig. 10(b) is a perspective view of the voltage detection terminal 540 as viewed from the Z-axis negative direction side (the side of a secondary battery cell 101). As compared with a voltage detection terminal 140 according to the first embodiment, the voltage detection terminal 540 according to the fifth embodiment has, between a first base portion 141 and a second base portion 142, instead of a protrusion portion 143, a protrusion portion 543 having a curved shape formed so as to protrude in a Z-axis negative direction in cross-sectional view in a Z-axis direction (or in plan view of a YZ plane).

Furthermore, the first base portion 141 and the second base portion 142 are provided in a staggered positional relation in cross-sectional view in the Z-axis direction (or in plan view of the YZ plane). A distance d2 (see Fig. 10(a)) from an apex of protrusion of the protrusion portion 543 with respect to a support portion 144 of the second base portion 142 is longer than a distance d1 (see Fig. 10(b)) from an apex of protrusion of the protrusion portion 543 with respect to the first base portion 141. The other configurations are similar to those of the voltage detection terminal 140 of the first embodiment.

Therefore, in the voltage detection terminal 540, it is possible to obtain effects similar to those of the first embodiment, and an effect that there is no shape restriction that the first base portion 141 and the second base portion 142 are located on the same plane, and a degree of freedom in spatial arrangement can be increased. Note that the same applies to a case where the shape of the protrusion portion 543 is not a curved shape but a bent shape (third embodiment) or a rectangular shape (fourth embodiment).

### <Sixth Embodiment>

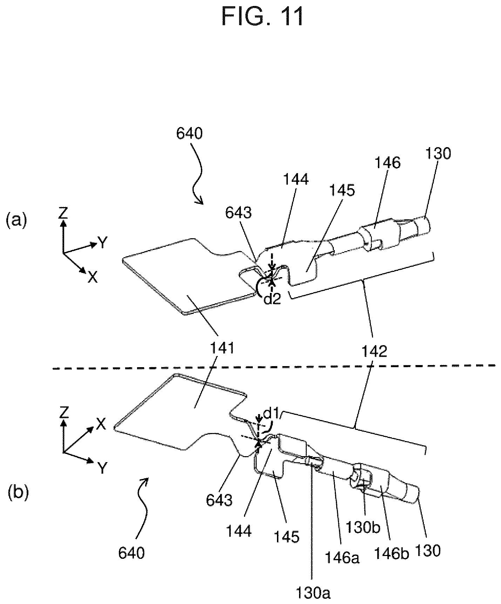

Fig. 11 is a perspective view of a voltage detection terminal 640 according to a sixth embodiment. Fig. 11(a) is a perspective view of the voltage detection terminal 640 as viewed from the Z-axis positive direction side (the side of a harness case 5), and Fig. 11(b) is a perspective view of the voltage detection terminal 640 as viewed from the Z-axis negative direction side (the side of a secondary battery cell 101). As compared with a voltage detection terminal 140 according to the fifth embodiment, the voltage detection terminal 640 according to the sixth embodiment has, between a first base portion 141 and a second base portion 142, instead of a protrusion portion 543, a protrusion portion 643 having a curved shape formed so as to protrude in a Z-axis negative direction in cross-sectional view in a Z-axis direction (or in plan view of a YZ plane).

In the voltage detection terminal 640 according to the sixth embodiment, a magnitude relation d2 < d1, which is opposite to that of the fifth embodiment, is established for the distance d2 and the distance d1 (see Figs. 11(a) and 11(b)). The other configurations are similar to those of the voltage detection terminal 540 of the fifth embodiment. Therefore, the sixth embodiment can also obtain effects similar to those of the fifth embodiment. Note that the same applies to a case where the shape of the protrusion portion 643 is not a curved shape but a bent shape (third embodiment) or a rectangular shape (fourth embodiment).

### <Seventh Embodiment>

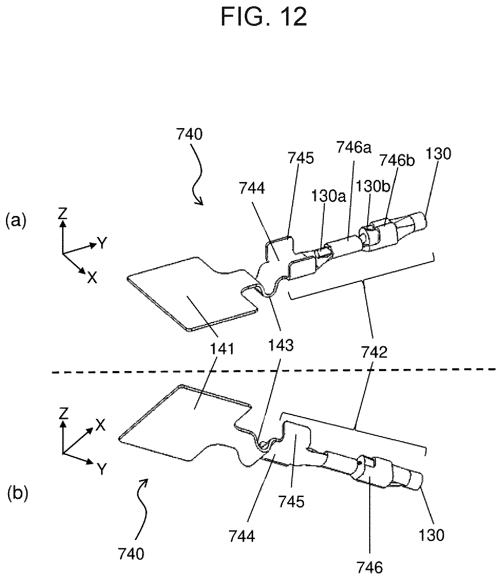

Fig. 12 is a perspective view of a voltage detection terminal 740 according to a seventh embodiment as an example useful for understanding the invention rather than an embodiment of the invention. Fig. 12(a) is a perspective view of the voltage detection terminal 740 as viewed from the Z-axis positive direction side (the side of a harness case 5), and Fig. 12(b) is a perspective view of the voltage detection terminal 740 as viewed from the Z-axis negative direction side (the side of a secondary battery cell 101).

The voltage detection terminal 740 according to the seventh embodiment has a second base portion 742 instead of a second base portion 142 as compared with a voltage detection terminal 140 according to the first embodiment. The other configurations are similar to those of the voltage detection terminal 140 of the first embodiment.

The second base portion 742 has a shape symmetrical with respect to a YZ plane as compared with the second base portion 142 according to the first embodiment. The second base portion 742 has a support portion 744, a fitting portion 745, and a connection portion 746.

The support portion 744 and the fitting portion 745 are located on the side of a protrusion portion 143 in the second base portion 742. The fitting portion 745 intersects with the support portion 744 and protrudes in a Z-axis positive direction so as to be supported by the support portion 144. The fitting portion 745 is fitted into a fitting portion 52 of the harness case 5 and is fitted into the fitting portion 52.

The connection portion 746 is located on the side opposite to the protrusion portion 143 in the second base portion 742, and is connected to a voltage detection line 130 by caulking. The connection portion 746 has a first connection portion 746a and a second connection portion 746b. The first connection portion 746a and the second connection portion 746b are caulking members, and legs of the caulking extend in the Z-axis positive direction similarly to the fitting portion 145.

The protrusion direction of the protrusion portion 143 of the voltage detection terminal 740 is a direction facing the secondary battery cell 101, and the protrusion direction of the fitting portion 745 and the leg of the caulking of the connection portion 746 is a direction facing the harness case 5.

The connection portion 746 caulks an electric wire exposed portion 130a by the first connection portion 746a to electrically connect the voltage detection line 130 to the voltage detection terminal 740. In addition, the connection portion 746 caulks an insulator covering portion 130b of the voltage detection line 130 corresponding to the root of the electric wire exposed portion 130a by the second connection portion 746b to physically fixe the voltage detection line 130 to the voltage detection terminal 740.

As described above, in the seventh embodiment, the protrusion direction of the fitting portion 745 and the leg of the caulking of the connection portion 746 is the opposite direction of the Z axis as compared with the first embodiment, but effects similar to those of the first embodiment can be obtained.

Note that the voltage detection terminals 240, 340, 440, 540, and 640 of the second to sixth embodiments may also be deformed such that the protrusion direction of the fitting portion 145 and the leg of the caulking of the connection portion 146 in the second base portion 142 becomes the Z-axis positive direction, like the voltage detection terminal 740 of the seventh embodiment with respect to the voltage detection terminal 140 of the first embodiment.

The voltage detection terminals 340, 440, 540, 640, and 740 of the third to seventh embodiments may also be deformed such that the protrusion direction of the protrusion portions 343, 443, 543, 643, and 143 becomes the Z-axis positive direction, like the voltage detection terminal 240 of the second embodiment with respect to the voltage detection terminal 140 of the first embodiment.

The above description is merely an example, and the present invention is not limited to the configurations of the above-described embodiments, and includes various modifications. For example, the above-described embodiments have been described in detail in order to describe the present invention in an easy-to-understand manner, and are not necessarily limited to those having all the described configurations.

### Reference Signs List

- 3: Bus bar case
- 4: Bus bar cover
- 5: Harness case
- 6: End plate
- 7: Center plate
- 8: Side frame
- 9: Cell holding mechanism
- 10: Cell block
- 51: Wiring storage portion
- 52: Fitting portion
- 100: Secondary battery module
- 101: Secondary battery cell
- 120: Bus bar
- 130: Voltage detection line
- 130a: Electric wire exposed portion
- 130b: Insulator covering portion
- 140, 240, 340, 440, 540, 640, 740: Voltage detection terminal
- 141: First base portion
- 142: Second base portion
- 143, 243, 343, 443, 543, 643: Protrusion portion
- 144, 744: Support portion
- 145, 745: Fitting portion
- 146, 746: Connection portion
- 146a, 747a: First connection portion
- 146b, 746b: Second connection portion

## Claims

1. A battery pack comprising a plurality of batteries (101) stacked and arranged in the longitudinal direction of the battery pack, a bus bar (120) connected to electrode terminals (104, 105) of the plurality of batteries, a terminal (140) connected to the bus bar, and an electric wire (130) connected to the terminal, wherein
the terminal has
a first base portion (141) that is located on one end side in a lateral direction of the terminal and is bonded to the bus bar in a vertical direction by ultrasonic welding,
a second base portion (142) that is located on the other end side in the lateral direction and is connected to the electric wire, and
a protrusion portion (143) that is located between the first base portion and the second base portion and protrudes in the vertical direction;
wherein
the protrusion portion protrudes in the vertical direction to the side of the plurality of batteries, and **characterized in that**
the electric wire is connected to the second base portion on the side to which the protrusion portion protrudes in the terminal.

2. The battery pack according to claim 1, wherein
the second base portion (142) has
a first connection portion (146a) which is located on the side of the first base portion (141) and is connected to an uncovered portion (130a) of the electric wire, and
a second connection portion (146b) which is located on the side opposite to the first base portion and to which a portion (130b) covered with a covering member of the electric wire (130) is fixed.

3. The battery pack according to claim 1, wherein
in the protrusion portion (143), a first height of an apex of the protrusion portion with respect to a portion continuous with the first base portion (141) is lower than a second height of the apex with respect to a portion continuous with the second base portion (142), in cross-sectional view in the vertical direction.

4. The battery pack according to claim 1, wherein
in the protrusion portion (143), a first height of an apex of the protrusion portion with respect to a portion continuous with the first base portion (141) is higher than a second height of the apex with respect to a portion continuous with the second base portion (142), in cross-sectional view in the vertical direction.

5. The battery pack according to claim 1, wherein
a cross-sectional shape of the protrusion portion (143, 343, 443) in the vertical direction is a curved shape, a bent shape, or a rectangular shape.

## Patentansprüche

1. Batteriepack umfassend mehrere Batterien (101), die in der Längsrichtung des Batteriepacks gestapelt und angeordnet sind, eine Stromschiene (120), die mit Elektrodenanschlüssen (104, 105) der meherern Batterien verbunden ist, einen Anschluss (140), der mit der Stromschiene verbunden ist, und ein elektrisches Kabel (130), das mit dem Anschluss verbunden ist, wobei
der Anschluss aufweist:
einen ersten Grundabschnitt (141), der auf einer Endseite in einer seitlichen Richtung des Anschlusses angeordnet ist und mit der Stromschiene in einer vertikalen Richtung durch Ultraschallschweißen verbunden ist,
einen zweiten Grundabschnitt (142), der auf der anderen Endseite in der seitlichen Richtung angeordnet ist und mit dem elektrischen Kabel verbunden ist, und
einen Vorsprungsabschnitt (143), der zwischen dem ersten Grundabschnitt und dem zweiten Grundabschnitt angeordnet ist und in der vertikalen Richtung vorsteht;
wobei der Vorsprungsabschnitt in der vertikalen Richtung zu der Seite der mehreren Batterien vorsteht, und
**dadurch gekennzeichnet, dass** das elektrische Kabel mit dem zweiten Grundabschnitt auf der Seite verbunden ist, zu der der Vorsprungsabschnitt im Anschluss hin vorsteht.

2. Batteriepack nach Anspruch 1, wobei der zweite Grundabschnitt (142) aufweist:
einen ersten Verbindungsabschnitt (146a), der auf der Seite des ersten Grundabschnitts (141) angeordnet ist und mit einem unbedeckten Abschnitt (130a) des elektrischen Kabels verbunden ist, und
einen zweiten Verbindungsabschnitt (146b), der auf der Seite gegenüber dem ersten Grundabschnitt angeordnet ist und an dem ein Abschnitt (130b), der mit einem Abdeckelement des elektrischen Kabels (130) bedeckt ist, fixiert ist.

3. Batteriepack nach Anspruch 1, wobei in Querschnittsansicht in der vertikalen Richtung im Vorsprungsabschnitt (143) eine erste Höhe eines Scheitels des Vorsprungsabschnitts bezüglich eines Abschnitts, der mit dem ersten Grundabschnitt (141) kontinuierlich ist, niedriger ist als eine zweite Höhe des Scheitels bezüglich eines Abschnitts, der mit dem zweiten Grundabschnitt (142) kontinuierlich ist.

4. Batteriepack nach Anspruch 1, wobei in Querschnittsansicht in der vertikalen Richtung im Vorsprungsabschnitt (143) eine erste Höhe eines Scheitels des Vorsprungsabschnitts bezüglich eines Abschnitts, der mit dem ersten Grundabschnitt (141) kontinuierlich ist, höher ist als eine zweite Höhe des Scheitels bezüglich eines Abschnitts, der mit dem zweiten Grundabschnitt (142) kontinuierlich ist.

5. Batteriepack nach Anspruch 1, wobei eine Querschnittsform des Vorsprungsabschnitts (143, 343, 443) in der vertikalen Richtung eine gekrümmte Form, eine gebogene Form oder eine rechteckige Form ist.

## Revendications

1. Bloc-batterie comprenant une pluralité de batteries (101) empilées et agencées dans le sens longitudinal du bloc-batterie, une barre omnibus (120) connectée à des bornes (104, 105) d'électrodes de la pluralité de batteries, une borne (140) connectée à la barre omnibus, et un fil électrique (130) connecté à la borne, dans lequel
la borne a
une première partie (141) de base qui est située sur un côté d'extrémité dans un sens latéral de la borne et est liée à la barre omnibus dans un sens vertical par soudage par ultrasons,
une deuxième partie (142) de base qui est située sur l'autre côté d'extrémité dans le sens latéral et est connectée au fil électrique, et
une partie (143) en saillie qui est située entre la première partie de base et la deuxième partie de base et fait saillie dans le sens vertical ;
dans lequel
la partie en saillie fait saillie dans le sens vertical jusqu'au côté de la pluralité de batteries, et **caractérisé en ce que**
le fil électrique est connecté à la deuxième partie de base sur le côté jusqu'auquel la partie en saillie fait saillie dans la borne.

2. Bloc-batterie selon la revendication 1, dans lequel
la deuxième partie (142) de base a
une première partie (146a) de connexion qui est située sur le côté de la première partie (141) de base et est connectée à une partie non recouverte (130a) du fil électrique, et
une deuxième partie (146b) de connexion qui est située sur le côté opposé à la première partie de base et à laquelle une partie (130b) recouverte avec un élément de recouvrement du fil électrique (130) est fixée.

3. Bloc-batterie selon la revendication 1, dans lequel
dans la partie (143) en saillie, une première hauteur d'un sommet de la partie en saillie par rapport à une partie continue avec la première partie (141) de base est inférieure à une deuxième hauteur du sommet par rapport à une partie continue avec la deuxième partie (142) de base dans une vue en coupe transversale dans le sens vertical.

4. Bloc-batterie selon la revendication 1, dans lequel
dans la partie (143) en saillie, une première hauteur d'un sommet de la partie en saillie par rapport à une partie continue avec la première partie (141) de base est supérieure à une deuxième hauteur du sommet par rapport à une partie continue avec la deuxième partie (142) de base dans une vue en coupe transversale dans le sens vertical.

5. Bloc-batterie selon la revendication 1, dans lequel
une forme en coupe transversale de la partie (143, 343, 443) en saillie dans le sens vertical est une forme incurvée, une forme recourbée, ou une forme rectangulaire.
